# EUROPÄISCHE PATENTSCHRIFT

(11) **EP 1 686 276 B1**
(45) Veröffentlichungstag und Bekanntmachung des Hinweises auf die Patenterteilung: **26.07.2017**
(21) Anmeldenummer: 05100518.9
(22) Anmeldetag: 27.01.2005
(51) Int. Cl.: F16D 21/06, F16D 25/10

(54) **Doppelkupplung mit Kupplungssteg**
Twin clutch with partition wall
Embrayage double avec âme intermédiaire

(43) Veröffentlichungstag der Anmeldung: 02.08.2006
(73) Patentinhaber: Getrag Ford Transmissions GmbH, 50735 Köln (DE)
(72) Erfinder: Hegerath, Andreas, 50126, Bergheim (DE)

(56) Entgegenhaltungen:
- EP-A- 1 522 753
- WO-A-2004/104439
- DE-A1- 10 146 606
- DE-U1- 9 114 528
- US-A1- 2004 206 599
- PATENT ABSTRACTS OF JAPAN Bd. 1999, Nr. 01, 29. Januar 1999 (1999-01-29) & JP 10 281178 A (NSK WARNER KK), 20. Oktober 1998 (1998-10-20)

## Beschreibung

Die Erfindung betrifft eine Doppelkupplung für ein Getriebe mit einer ersten Getriebeeingangswelle und einer dazu koaxial angeordneten zweiten Getriebeeingangswelle.

Eine derartige Doppelkupplung ist beispielsweise aus der EP 1 195 537 bekannt. Die Doppelkupplung umfasst dabei eine erste und zweite Reibkupplung, die in axialer Richtung der Doppelkupplung nebeneinander angeordnet sind und jeweils Außenlamellen und Innenlamellen aufweisen. Die Innenlamellen der ersten und zweiten Reibkupplung haben jeweils einen gleichen Innendurchmesser und einen gleichen Außendurchmesser. Die Außenlamellen und die Innenlamellen einer Reibkupplung lassen sich jeweils durch eine hydraulische Kolben-Zylinder-Einheit zusammendrücken, so dass aufgrund der Reibung zwischen Außenlamellen und Innenlamellen ein Drehmoment übertragen wird.

Des weiteren umfasst die Doppelkupplung der EP 1 195 537 eine Kupplungsnabe, die mit einer Antriebswelle für die Doppelkupplung drehfest verbindbar ist. Die Antriebswelle kann beispielsweise Teil eines Verbrennungsmotors in einem Kraftfahrzeug sein. Das Drehmoment des Verbrennungsmotors lässt sich bei geschlossener erster Reibkupplung über einen ersten Kupplungstopf, der drehfest mit den Außenlamellen der ersten Kupplung verbunden ist, mit der ersten Getriebeeingangswelle verbinden. In ähnlicher Weise ist ein zweiter Kupplungstopf vorgesehen, der drehfest mit den Außenlamellen der zweiten Kupplung verbunden ist und das Drehmoment von der Antriebswelle auf die zweite Getriebeeingangswelle überträgt, falls die zweite Kupplung geschlossen ist.

Ein Kupplungssteg sorgt für eine drehfeste Verbindung zwischen der Kupplungsnabe und den Innenlamellen der ersten und zweiten Reibkupplung. Dabei weist der Kupplungssteg einen ersten Lamellenträger für die Innenlamellen der ersten Reibkupplung, einen zweiten Lamellenträger für die Innenlamellen der zweiten Kupplung sowie eine scheibenförmige Druckplatte auf, die zwischen dem Lamellenpaket der ersten Reibkupplung und dem zweiten Lamellenpaket der zweiten Reibkupplung angeordnet ist. Die scheibenförmige Druckplatte ist massiv ausgeführt und dient als Widerlager für die Innenlamellen und Außenlamellen einer Reibkupplung, wenn diese hydraulisch zusammengedrückt werden.

In der EP 1 195 537 erstreckt sich die scheibenförmige, massiv ausgebildete Druckplatte in radialer Richtung von der Kupplungsnabe bis zu einem Außendurchmesser, der in etwa dem Außendurchmesser der Innenlamellen der ersten und zweiten Reibkupplung entspricht. Somit nimmt die Druckplatte nicht nur die Druck- oder Presskräfte auf, sondern auch die Biegemomente, die auf den Kupplungssteg wirken, wenn das Lamellenpaket einer der Reibkupplungen zusammengedrückt wird.

Seitlich angeformt an diese Druckplatte erstrecken sich in jeweils axialer Richtung der erste und zweite Innenlamellenträger für die Aufnahme der Innenlamellen. Zwar nimmt ein derart aufgebauter Kupplungssteg sicher die auf ihn wirkenden Kräfte und Momente auf, doch ist er vergleichsweise schwer und teuer.

Die nicht vorveröffentlichte EP 1 522 753 A1 offenbart eine Doppelkupplung, die, wie die Doppelkupplung der EP 1 195 537, eine erste Reibkupplung und eine zweite Reibkupplung aufweist, die axial neben der ersten Reibkupplung angeordnet ist. Die Reibkupplungen weisen jeweils Innenlamellen und Außenlamellen auf. Das Drehmoment von einem Motor wird dabei auf Innenlamellenträger übertragen, welches dann bei geschlossenem Zustand einer der Reibkupplungen auf Außenlamellen eben dieser geschlossenen Reibkupplung übertragen wird. Die Übertragung des Drehmoments erfolgt dabei nicht über eine Kupplungsnabe, sondern über einen Umfangssteg, der mit einem mit dem Motor gekoppelten Kupplungstopf drehfest verbunden ist. Der Umfangssteg ist aber dabei von der Kupplungsnabe radial beabstandet. Die beiden Innenlamellenträger sind mit einer zentral angeordneten, scheibenförmigen Druckplatte einstückig ausgebildet. Da der Drehmomentfluss auf die Innenlamellenträger nicht über die Kupplungsnabe erfolgt, ist ein Kupplungssteg, der für eine drehfeste Verbindung zwischen Kupplungsnabe und den Innenlamellen der ersten und zweiten Reibkupplung und somit für eine Drehmomentübertragung von der Kupplungsnabe auf die Innenlamellenträger sorgt, nicht vorgesehen.

In der WO 2004/104439 ist eine weitere Kupplungsvorrichtung mit einer ersten Reibkupplung und einer zweiten Reibkupplung offenbart, die axial neben einander angeordnet sind. Ein Drehmoment eines die Kupplungsvorrichtung antreibenden Motors wird über eine Kupplungsnabe auf Innenlamellenträger der Reibkupplungen übertragen, wobei zur drehfesten Verbindung von Kupplungsnabe und dazu radial beabstandeten Innenlamellenträger ein umlaufender zentraler Steg vorgesehen ist, der sich in radialer Richtung erstreckt. Die Innenlamellenträger, der zentrale Steg und die Kupplungsnabe sind dabei als einstückiges Bauteil ausgebildet, welches vergleichweise starr, aber auch schwer und dessen Herstellung aufwändig sein dürfte.

Der Erfindung liegt die Aufgabe zugrunde, eine Doppelkupplung der oben beschriebenen Art mit einem Kupplungssteg bereitzustellen, der leicht ist und einfach und kostengünstig herzustellen ist.

Die der Erfindung zugrundeliegende Aufgabe wird dadurch gelöst, dass sich die scheibenförmige Druckplatte in radialer Richtung im wesentlichen von dem Innendurchmesser der Innenlamellen nach außen erstreckt und wenigstens einer der Innenlamellenträger ein radiales Verbindungsstück aufweist, das die scheibenförmige Druckplatte mit der Kupplungsnabe verbindet. Dadurch wird der Kupplungssteg mittels der Druckplatte nur in dem notwendigen Bereich massiv ausgeführt, in dem das Lamellenpaket der ersten oder zweiten Reibkupplung gegen den Kupplungssteg gepresst wird. Das radiale Verbindungsstück des Innenlamellenträgers überbrückt den Abstand der scheibenförmigen Druckplatte zu der Kupplungsnabe. Der Abstand ergibt sich daraus, dass ein Innendurchmesser der Druckplatte größer ist als ein Außendurchmesser der Kupplungsnabe, an dem der Kupplungssteg mit der Kupplungsnabe verbunden ist.

Das radiale Verbindungsstück muss biegesteif ausgeführt sein, damit der Kupplungssteg bei Druckbeaufschlagung sich nicht oder nicht übermäßig verbiegt und ein feststehendes Widerlager für die zusammengedrückten Innen- und Außenlamellen bildet. Demnach muss die scheibenförmige Druckplatte in der erfindungsgemäßen Lösung keine Biegemomente aufnehmen.

In einem bevorzugten Ausführungsbeispiel weisen beide Innenlamellenträger ein radiales Verbindungsstück auf. Dies bedeutet, dass die scheibenförmige Druckplatte durch zwei radiale Verbindungsstücke mit der Kupplungsnabe verbunden wird. Um die Kosten für die Herstellung einer Doppelkupplung zu reduzieren, ist es zweckmäßig, wenn der erste und zweite Innenlamellenträger baugleich sind. Somit wird der Kupplungssteg aus zwei gleichen Innenlamellenträgern und der Druckplatte gebildet. Der Kupplungssteg weist dabei einen symmetrischen Aufbau auf.

Erfindungsgemäß sind der erste und zweite Innenlamellenträger jeweils einstückig ausgebildet. Der Innenlamellenträger kann dabei das oben bereits erwähnte radiale Verbindungsstück und ein Trägerteil aufweisen, das sich in axialer Richtung erstreckt und die Innenlamellen einer der Reibkupplungen drehfest aufnimmt. Das Trägerteil und das Verbindungsstück stehen somit senkrecht zueinander und können im Profil gesehen als zwei Schenkel einer L-Form angesehen werden. Als Ganzes betrachtet weist der Innenlamellenträger eine Topfform auf, wobei das Verbindungsstück den Topfboden und das Trägerteil den Topfseitenrand bildet. In der Doppelkupplung sind die beiden Lamellenträger Rücken an Rücken beziehungsweise Topfboden an Topfboden angeordnet, so dass die beiden Verbindungsstücke direkt aneinander angrenzen und die beiden Trägerteile auf einem gleichen Umfang liegen, jedoch in jeweils entgegengesetzter axialer Richtung zeigen.

Erfindungsgemäß ist der Lamellenträger ein Blechumformteil, das durch Tiefziehen oder ähnliche Verfahren kostengünstig hergestellt werden kann. Die Lamellenträger können unmittelbar miteinander, beispielsweise durch Schweißen verbunden sein. An einem Fußende des radialen Verbindungsstückes ist der Lamellenträger bzw. sind die Lamellenträger mit der Kupplungsnabe verbunden, wobei auch vorzugsweise durch Schweißen eine feste Verbindung zwischen den Teilen (Verbindungsstück und Kupplungsnabe) hergestellt werden kann.

Gemäß der Erfindung ist zudem die scheibenförmige Druckplatte zwischen den Innenlamellenträgern angeordnet und wird durch diese spielfrei fixiert. Die Druckplatte kann an einem zur Kupplungsnabe zugewandten Ende wenigstens einen Zentrierabsatz aufweisen. Durch diesen Zentrierabsatz wird die scheibenförmige Druckplatte in Bezug zu der Kupplungsnabe zentriert, da die sich von der Kupplungsnabe bis zur Druckplatte erstreckenden Innenlamellenträger an dem Zentrierabsatz anliegen und die Druckplatte dementsprechend in ihrer Lage festlegen.

Das radiale Verbindungsstück kann wenigstens eine Auswölbung aufweisen, durch die das Flächenträgheitsmoment des Kupplungssteges erhöht wird, um diesen biegesteifer auszuführen. Wird die Druckplatte und die Kupplungsnabe durch die Verbindungsstücke zweier Lamellenträger verbunden, weist jedes Verbindungsstück zweckmäßig eine solche Auswölbung beziehungsweise eine Vielzahl von Auswölbungen auf, die in Umfangrichtung voneinander beanstandet sind.

In einem bevorzugten Ausführungsbeispiel ist zwischen dem ersten Innenlamellenträger und dem zweiten Innenlamellenträger eine Kammer ausgebildet, die wenigstens eine Öffnung an der Kupplungsnabe und jeweils wenigstens eine Öffnung an der ersten und/oder zweiten Reibkupplung aufweist. Durch die Kammer kann somit Öl zur ersten und/oder zweiten Reibkupplung geführt werden, das durch die Öffnung an der Kupplungsnabe in die Kammer eingeleitet wird. Das Öl fließt wird dabei von der Kupplungsnabe radial nach außen zu den Reibkupplungen.

Vorzugsweise ist die Kammer durch eine Trennscheibe in zwei Teilkammern getrennt. Die Trennscheibe erstreckt sich dabei in radialer Richtung. Jede Teilkammer weist eine Öffnung an der Kupplungsnabe auf. Eine erste Teilkammer ist mit der ersten Reibkupplung durch wenigstens eine Öffnung verbunden, so dass Öl von der Kupplungsnabe durch die erste Teilkammer zur ersten Reibkupplung strömen kann.

In analoger Weise stellt eine zweite Teilkammer eine Verbindung zwischen der zweiten Reibkupplung und der Kupplungsnabe dar. Die jeweiligen Öffnungen an der Kupplungsnabe sind derart getrennt, dass zwischen ihnen kein Öl fließen kann. Somit ist es möglich, die beiden Reibkupplungen voneinander unabhängig mit Öl zu versorgen.

Der erste und/oder zweite Innenlamellenträger kann seitlich an einem Bund des Kupplungsstegs angebracht sein, wobei durch wenigstens eine Aussparung am Bund wenigstens eine Öffnung zwischen Bund und Innenlamellenträger gegeben ist. Aufgrund der Aussparung liegt der Innenlamellenträger nicht über den gesamten Umfang an dem Bund an, so dass durch den sich daraus ergebenen Spalt Öl in die Kammer beziehungsweise in eine der Teilkammern gelangt.

Anhand der in den Figuren dargestellten Ausführungsbeispiele wird die Erfindung näher beschrieben. Es zeigen:
- Figur 1: eine erfindungsgemäße Doppelkupplung in einem ersten Ausführungsbeispiel;
- Figur 2: ein zweites Ausführungsbeispiel; und
- Figur 3: ein drittes Ausführungsbeispiel.

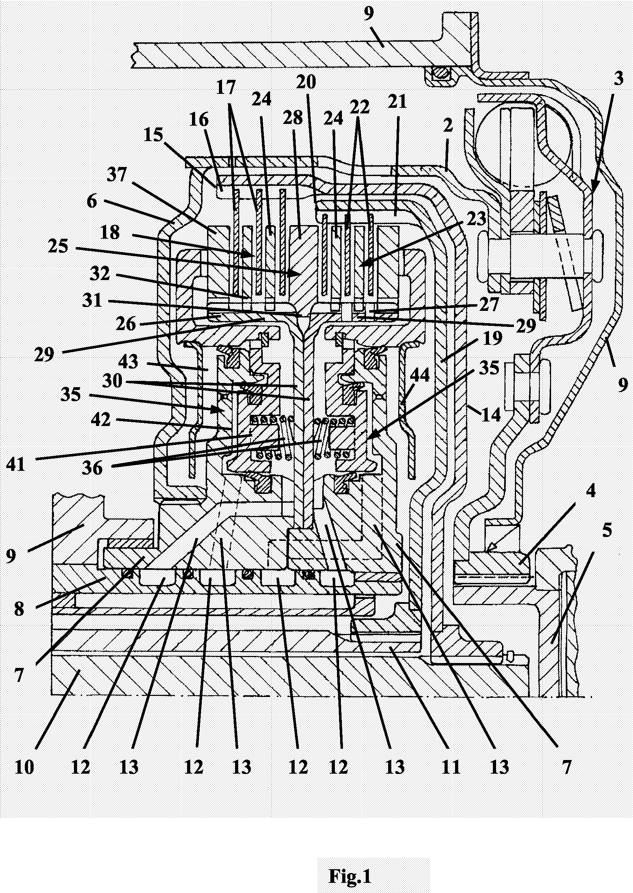

Die in Figur 1 gezeigte und allgemein mit 1 bezeichnete Doppelkupplung weist ein Kupplungsgehäuse 2 auf, das über eine Torsionsdämpfereinheit 3 an einem Kupplungsflansch 4 drehfest mit einer Antriebswelle 5 eines hier nicht dargestellten Motors verbunden ist.

Das Drehmoment des Motors wird über die Antriebswelle 5, den Kupplungsflansch 4 und das Kupplungsgehäuse 2 auf einen Kupplungsgehäusedeckel 6 übertragen, der drehfest mit einer zweigeteilten Kupplungsnabe 7 verbunden ist. Die Kupplungsnabe 7 ist drehbar um eine feststehende Kupplungsachse 8 gelagert, die fest mit einem Gehäuse 9 eines Getriebes verbunden ist, von dem in der Figur 1 noch eine Getriebeeingangswelle 10 und eine zweite Getriebeeingangswelle 11 dargestellt ist. Die zweite Getriebeeingangswelle 11 ist als Hohlwelle ausgebildet, die koaxial zur ersten Getriebeeingangswelle 10 angeordnet ist.

Neben der Drehlagerung der Kupplungsnabe 7 kommt der feststehenden Kupplungsachse 8 die Aufgabe zu, Öl, das aus dem Getriebe zugeführt wird, in der Doppelkupplung 1 zu verteilen. Dazu sind in der Kupplungsachse 8 mehrere ringförmige Ölkanäle 12 ausgebildet, von denen das Öl in ein System von Ölbohrungen 13 strömt.

Die erste Getriebeeingangswelle 10 ist drehfest mit einem ersten, äußeren Kupplungstopf 14 verbunden. An einem Topfrand 15 weist der Kupplungstopf 14 einen ersten Außenlamellenträger 16 für die drehfeste Aufnahme von Außenlamellen 17 einer ersten Reibkupplung 18 auf. Ein zweiter, innerer Kupplungstopf 19, der in dem äußeren Kupplungstopf 14 angeordnet ist, weist ebenfalls an einem Topfrand 20 einen zweiten Außenlamellenträger 21 auf, der Außenlamellen 22 einer zweiten Kupplung 23 drehfest in dem inneren Kupplungstopf 19 hält..

Die erste Reibkupplung 18 und die zweite Reibkupplung 23 weisen neben den Außenlamellen 17, 22 jeweils Innenlamellen auf, die für beide Reibkupplungen 18, 23 identisch sind und mit 24 bezeichnet werden. Die Innenlamellen 24 sind über einen Kupplungssteg 25 mit der Kupplungsnabe 7 drehfest verbunden sind. Der Kupplungssteg 25 umfasst dabei einen ersten Innenlamellenträger 26 zur Aufnahme der Innenlamellen der ersten Reibkupplung 18, einen zweiten Innenlamellenträger 27 zur Aufnahme der Innenlamellen der zweiten Reibkupplung 23 sowie eine Druckplatte 28.

Der Innenlamellenträger 26 umfasst ein sich in axialer Richtung erstreckendes Trägerteil 29 und ein dazu senkrechtes, in radialer Richtung sich erstreckendes Verbindungsstück 30, das die Kupplungsnabe 7 mit dem Trägerteil 29 verbindet. Der Innenlamellenträger 26 ist einstückig ausgebildet und kann durch Blechumformen hergestellt werden.

Auch der Innenlamellenträger 27 weist ein Trägerteil und ein Verbindungsstück auf, die aufgrund des identischen Aufbaus wie beim ersten Innenlamellenträger 26 ebenfalls mit 29 bzw. 30 bezeichnet sind. Die Innenlamellenträger 26, 27 sind dabei zueinander identisch aufgebaut und Rücken an Rücken angeordnet.

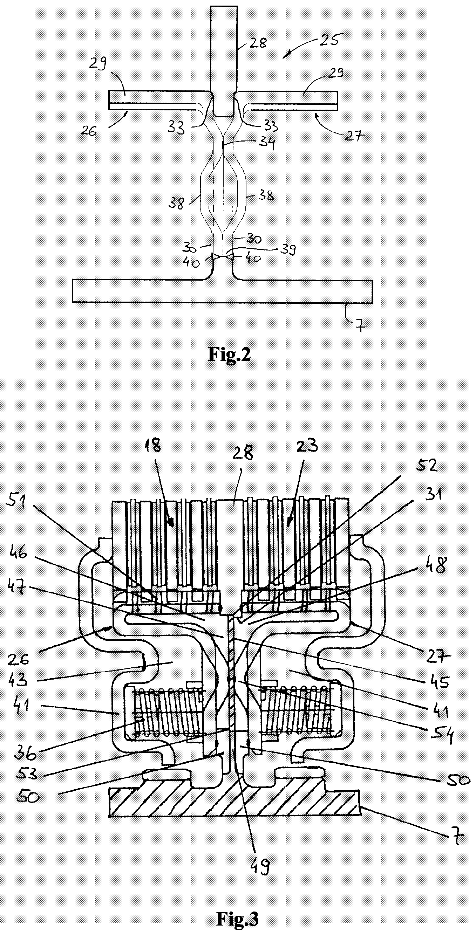

Wie der Figur 1 zu entnehmen ist, weist die Druckplatte 28 einen Innendurchmesser 31 auf, der in etwa einem Innendurchmesser 32 der Innenlamellen 24 entspricht. Die Druckplatte 28 ist zwischen dem Lamellenträger 26 und dem Lamellenträger 27 spielfrei fixiert und wird durch zwei ringförmige Absätze 33 (siehe Figur 2) zur Kupplungsnabe 7 zentriert. Dabei werden die Lamellenträger 26, 27 durch einzelne Schweißpunkte oder eine umlaufende Schweißnaht 34 (siehe Figur 2) zusammengehalten.

Um ein Drehmoment von der Antriebswelle 5 auf beispielsweise die erste Getriebeeingangswelle 10 zu übertragen, wird eine Kolben-Zylinder-Einheit 35 mit Druck beaufschlagt, so dass gegen die Kraft einer Feder 36 über einer Druckplatte 37 die Außenlamellen 17 und die Innenlamellen 24 der ersten Reibkupplung 18 zusammengedrückt werden. Dabei dient die Druckplatte 28 als Widerlager für die zusammengedrückten Lamellen 17, 24. Aufgrund des an der scheibenförmigen Druckplatte 28 anliegenden Druckes werden die Verbindungsstücke 30 des ersten und zweiten Innenlamellenträgers 26, 27 auf Biegung beansprucht. Es ist daher notwendig, die beiden Verbindungsstücke 30 so biegesteif auszuführen, dass der Kupplungssteg 25 aufgrund des an der Druckplatte 28 anliegenden Druckes nicht übermäßig verformt wird.

Die Kolben-Zylinder-Einheit 35 umfasst einen axial verschiebbaren Kolben 41, der eine ringförmige Arbeitskammer 42 begrenzt, in der der Druck zur Betätigung der ersten Reibkupplung 18 aufgebaut wird. Dazu wird in der Arbeitskammer 42 radial von innen Öl mit einem vorbestimmten Druck eingeleitet. Um zu verhindern, dass die Lammellen der ersten Reibkupplung durch Fliehkräfte zusammengedrückt werden, die auf das in der ringförmigen Arbeitskammer befindliche Öl wirken und dort einen Druck aufbauen, ist eine Ausgleichskammer 43 vorgesehen, die ebenfalls ringförmig ist und durch einen Ausgleichsdeckel 44 seitlich begrenzt wird. Der Ausgleichsdeckel 44 ist dabei mit dem Kolben 41 verbunden. Der durch Fliehkräfte in der Ausgleichskammer verursachte Druck drückt den Ausgleichsdeckel 44 und somit auch den Kolben 41 vom Kupplungssteg 25 weg, sodass das Zusammendrücken der Lamellen der ersten Reibkupplung aufgrund der auf das Öl wirkenden Fliehkräfte zumindest zum Teil kompensiert beziehungsweise überkompensiert wird. Für die zweite Reibkupplung gilt dies analog.

Die Figur 2 zeigt ein zweites Ausführungsbeispiel, wobei hier nur die Kupplungsnabe 7 und der Kupplungssteg 25 mit den Innenlamellenträger 26, 27 sowie der Druckplatte 28 dargestellt sind. Die Verbindungsstücke 30 der Innenlamellenträger 26, 28 weisen Auswölbungen 38 auf. Dabei sind mehrere Auswölbungen 38 an einem Verbindungsstück vorgesehen, die in Umfangsrichtung voneinander beabstandet sind und durch Bereiche ohne Auswölbungen (siehe gestrichelte Linie) voneinander getrennt sind. Durch derartig geformte Verbindungsstücke kann das Flächenträgheitsmoment des Kupplungsstegs 25 gegenüber eines Kupplungsstegs mit gerade verlaufenden Verbindungsstücken wesentlich vergrößert werden, was zu einem biegesteiferen Kupplungssteg führt.

Wie zu erkennen ist, laufen die Verbindungsstücke 30 an einem Fußende 39 wieder zusammen und werden dort mit der Kupplungsnabe 7 über Schweißnähte 40 verbunden. Da an den Fußenden 39 die höchste Biegebelastung auftritt, können die Auswölbungen 40 sich auch alternativ bis zur Kupplungsnabe 7 erstrecken, das heißt, die Verbindungsstücke 30 laufen an dem Fußende nicht zusammen, sondern treffen voneinander beabstandet auf die Kupplungsnabe 7 (nicht dargestellt). Auch ist es möglich, dass sich an dem Verbindungsstück 30 des Innenlamellenträgers 27, 28 jeweils einstückig ein Kupplungsnabenstück anschließt, das zumindest einen Teil der Kupplungsnabe 7 ersetzt beziehungsweise Teilfunktionen der Kupplungsnabe 7 übernimmt.

Figur 3 zeigt ein weiteres Ausführungsbeispiel der Erfindung, wobei ähnlich wie in Figur 2 nur einzelne Bauteile dargestellt sind. Zwischen dem ersten Innenlamellenträger 26 und zweiten Innenlamellenträger 27 ist eine Trennscheibe 45 angeordnet, die sich in radialer Richtung von der Kupplungsnabe 7 bis zur Druckplatte 28 erstreckt und eine Kammer 46 zwischen den Innenlamellenträger 26, 27 in eine erste Teilkammer 47 und eine zweite Teilkammer 48 teilt. Die Innenlamellenträger 26, 27 sind seitlich an einem radial nach außen stehenden Bund 49 des Kupplungsstegs 7 angeschweißt. In den Bund 49 sind am Umfang verteilt mehrere Aussparungen 50 eingearbeitet, durch die mehrere Spalte zwischen dem Bund 49 und jeweiligen Innenlamellenträger 26, 27 gebildet werden. Durch diese Spalte oder Öffnungen kann Öl in die erste beziehungsweise zweite Teilkammer 47, 48 zugeführt werden, das durch Öffnungen 51 an den jeweiligen Trägerteilen 29 der Innenlamellenträger 26, 27 fließt und die Lamellenpakete der beiden Reibkupplungen 18, 23 kühlt. Aufgrund der Trennscheibe 45 können die erste und die zweite Reibkupplung mit unterschiedlich großen Kühlströmen beaufschlagt werden. An dem Innendurchmesser 31 weist die Druckplatte 28 einen ringförmigen Absatz 52 auf, an dem die Trennscheibe 45 anliegt. Des weiteren ist beim Bund 49 ebenfalls ein Absatz 53 als weitere Anlage für die Trennscheibe 45 vorgesehen. Die Trennscheibe 45 ist an nach innen gezogenen Einwölbungen oder Einprägungen 54 der Innenlamellenträgern 26, 27 mit diesen verschweißt.

Der Innenlamellenträger 26 und der Kolben 41 bilden in diesem Ausführungsbeispiel die Wandungen der Ausgleichskammer 43 (siehe Figur 1), durch die ein Zusammendrücken der Lamellen der ersten Reibkupplung aufgrund von Fliehkräften verhindert wird (siehe Beschreibung zu Figur 1). In der Ausgleichskammer 43 befindet sich zudem die Feder 36, die nach erfolgter Betätigung der ersten Reibkupplung 18 den Kolben 41 wieder nach außen drückt. Auch für die zweite Reibkupplung 23 ist in spielsymmetrischer Anordnung ebenfalls eine Ausgleichskammer vorgesehen.

### Bezugszeichenliste

- 1: Doppelkupplung
- 2: Kupplungsgehäuse
- 3: Torsionsdämpfereinheit
- 4: Kupplungsflansch
- 5: Antriebswelle
- 6: Kupplungsgehäusedeckel
- 7: Kupplungsnabe
- 8: Kupplungsachse
- 9: Getriebegehäuse
- 10: Erste Getriebeeingangswelle
- 11: Zweite Getriebeeingangswelle
- 12: Ölkanal
- 13: Ölbohrung
- 14: Äußerer Kupplungstopf
- 15: Topfrand
- 16: Lamellenträger
- 17: Außenlamelle
- 18: Erste Reibkupplung
- 19: Innerer Kupplungstopf
- 20: Topfrand
- 21: Lamellenträger
- 22: Außenlamelle
- 23: Zweite Reibkupplung
- 24: Innenlamelle
- 25: Kupplungssteg
- 26: Lamellenträger
- 27: Lamellenträger
- 28: Druckplatte
- 29: Trägerteil
- 30: Verbindungsstück
- 31: Innendurchmesser
- 32: Innendurchmesser
- 33: Absatz
- 34: Schweißpunkt/Schweißnaht
- 35: Kolben-Zylinder-Einheit
- 36: Feder
- 37: Druckplatte
- 38: Auswölbung
- 39: Fußende
- 40: Schweißnaht
- 41: Kolben
- 42: Arbeitskammer
- 43: Ausgleichskammer
- 44: Ausgleichsdeckel
- 45: Trennscheibe
- 46: Kammer
- 47: Erste Teilkammer
- 48: Zweite Teilkammer
- 49: Bund
- 50: Aussparung
- 51: Öffnung
- 52: Absatz
- 53: Absatz
- 54: Einwölbung

## Patentansprüche

1. Doppelkupplung (1) für ein Getriebe mit einer ersten Getriebeeingangswelle (10) und einer dazu koaxial angeordneten zweiten Getriebeeingangswelle (11), umfassend
- eine erste Reibkupplung (18) und eine zweite Reibkupplung (23), die in axialer Richtung nebeneinander angeordnet sind und die jeweils ein Lamellenpaket mit Innenlamellen (24) und Außenlamellen (17, 22) aufweisen, wobei die Innenlamellen (24) der ersten und zweiten Reibkupplung einen gleichen Innendurchmesser aufweisen;
- einen ersten Kupplungstopf (14), um die Außenlamellen (17) der ersten Reibkupplung (18) drehfest mit der ersten Getriebeeingangswelle (10) zu verbinden, und einen zweiten Kupplungstopf (19), um die Außenlamellen (22) der zweiten Kupplung (23) drehfest mit der zweiten Getriebeeingangswelle (11) zu verbinden;
- eine Kupplungsnabe (7), die mit einer Antriebswelle (5) für die Doppelkupplung (1) drehfest verbindbar ist,
- einen drehfest mit der Kupplungsnabe (7) verbundener Kupplungssteg (25), der einen ersten Innenlamellenträger (26) für die Innenlamellen (24) der ersten Reibkupplung (18), einen zweiten Innenlamellenträger (27) für die Innenlamellen (24) der zweiten Reibkupplung (23) sowie eine scheibenförmige Druckplatte (28) aufweist, die zwischen dem Lamellenpaket der ersten Reibkupplung (18) und dem Lamellenpaket der zweiten Reibkupplung (23) angeordnet ist,
wobei sich die scheibenförmige Druckplatte (28) in radialer Richtung im wesentlichen von dem Innendurchmesser der Innenlamellen (24) nach außen erstreckt und wenigstens einer der Innenlamellenträger (26, 27) ein radiales Verbindungsstück (30) aufweist, das die scheibenförmige Druckplatte (28) mit der Kupplungsnabe (7) verbindet, und **dadurch gekennzeichnet, dass** der erste und zweite Innenlamellenträger (26, 27) jeweils einstückig ausgebildet und jeweils ein Blechumformteil sind, und wobei die scheibenförmige Druckplatte (28) zwischen den Innenlamellenträgern (26, 27) angeordnet ist und durch diese spielfrei fixiert wird.

2. Doppelkupplung nach Anspruch 1, **dadurch gekennzeichnet, d**ass beide Innenlamellenträger (26, 27) ein radiales Verbindungsstück (30) aufweisen.

3. Doppelkupplung nach Anspruch 2, **dadurch gekennzeichnet, dass** der erste und zweite Innenlamellenträger (26, 27) baugleich sind.

4. Doppelkupplung nach einem der Ansprüche 1 bis 3, **dadurch gekennzeichnet, dass** die Innenlamellenträger (26, 27) unmittelbar miteinander verbunden sind.

5. Doppelkupplung nach einem der Ansprüche 1 bis 4, **dadurch gekennzeichnet, dass** zumindest einer der Innenlamellenträger (26, 27) mit der Kupplungsnabe (7) verschweißt ist.

6. Doppelkupplung nach einem der Ansprüche 1 bis 5, **dadurch gekennzeichnet, dass** die Druckplatte (28) an einem zur Kupplungsnabe (7) zugewandten Ende wenigstens einen Zentrierabsatz (33) aufweist.

7. Doppelkupplung nach einem der Ansprüche 1 bis 6, **dadurch gekennzeichnet, dass** das radiale Verbindungsstück (30) wenigstens eine Auswölbung aufweist.

8. Doppelkupplung (1) nach einem der Ansprüche 1 bis 7, **dadurch gekennzeichnet, dass** zwischen dem ersten Innenlamellenträger (26) und den zweiten Innenlamellenträger (27) eine Kammer (46) ausgebildet ist, die wenigstens eine Öffnung an der Kupplungsnabe und jeweils wenigstens eine Öffnung (51) an der ersten und/oder zweiten Reibkupplung (18, 23) aufweist.

9. Doppelkupplung (1) nach Anspruch 8, **dadurch gekennzeichnet, dass** die Kammer (46) durch eine Trennscheibe (45) in zwei Teilkammern (47, 48) geteilt ist.

10. Doppelkupplung (1) nach Anspruch 8 oder 9, **dadurch gekennzeichnet, dass** der Innenlamellenträger (26, 27) seitlich an einem Bund (49) des Kupplungsstegs (7) angebracht ist, wobei durch wenigstens eine Aussparung (50) am Bund (49) wenigstens eine Öffnung zwischen Bund (49) und Innenlamellenträger (26; 27) gegeben ist.

## Claims

1. Dual clutch (1) for a gearbox, having a first gearbox input shaft (10) and having a second gearbox input shaft (11) arranged coaxially with respect to said first gearbox input shaft, comprising
- a first friction clutch (18) and a second friction clutch (23) which are arranged adjacent to one another in an axial direction and which have in each case one plate assembly with inner plates (24) and outer plates (17, 22), wherein the inner plates (24) of the first and second friction clutches have an equal inner diameter;
- a first clutch pot-shaped structure (14) for connecting the outer plates (17) of the first friction clutch (18) rotationally conjointly to the first gearbox input shaft (10), and a second clutch pot-like structure (19) for connecting the outer plates (22) of the second clutch (23) rotationally conjointly to the second gearbox input shaft (11);
- a clutch hub (7) which is connectable rotationally conjointly to a drive-input shaft (5) for the dual clutch (1),
- a clutch web (25) which is connected rotationally conjointly to the clutch hub (7) and which has a first inner plate carrier (26) for the inner plates (24) of the first friction clutch (18), a second inner plate carrier (27) for the inner plates (24) of the second friction clutch (23), and a disc-shaped pressure plate (28), which is arranged between the plate assembly of the first friction clutch (18) and the plate assembly of the second friction clutch (23),
wherein the disc-shaped pressure plate (28) extends in a radial direction substantially from the inner diameter of the inner plates (24) outwards, and at least one of the inner plate carriers (26, 27) has a radial connecting piece (30) which connects the disc-shaped pressure plate (28) to the clutch hub (7),
and **characterized in that**
the first and second inner plate carriers (26, 27) are each of unipartite form and are in each case a deformed sheet-metal part,
and wherein the disc-shaped pressure plate (28) is arranged between the inner plate carriers (26, 27) and is fixed in play-free fashion by the latter.

2. Dual clutch according to Claim 1, **characterized in that** the two inner plate carriers (26, 27) have a radial connecting piece (30).

3. Dual clutch according to Claim 2, **characterized in that** the first and second inner plate carriers (26, 27) are structurally identical.

4. Dual clutch according to one of Claims 1 to 3, **characterized in that** the inner plate carriers (26, 27) are directly connected to one another.

5. Dual clutch according to one of Claims 1 to 4, **characterized in that** at least one of the inner plate carriers (26, 27) is welded to the clutch hub (7).

6. Dual clutch according to one of Claims 1 to 5, **characterized in that** the pressure plate (28) has at least one centring shoulder (33) on an end facing toward the clutch hub (7).

7. Dual clutch according to one of Claims 1 to 6, **characterized in that** the radial connecting piece (30) has at least one bulged portion.

8. Dual clutch (1) according to one of Claims 1 to 7, **characterized in that**, between the first inner plate carrier (26) and the second inner plate carrier (27), there is formed a chamber (46) which has at least one opening at the clutch hub and in each case at least one opening (51) at the first and/or second friction clutch (18, 23).

9. Dual clutch (1) according to Claim 8, **characterized in that** the chamber (46) is divided by a separating disc (45) into two sub-chambers (47, 48).

10. Dual clutch (1) according to Claim 8 or 9, **characterized in that** the inner plate carrier (26, 27) is attached laterally to a collar (49) of the clutch web (7), wherein at least one opening between collar (49) and inner plate carrier (26; 27) is realized by means of at least one cutout (50) on the collar (49).

## Revendications

1. Double embrayage (1) pour une boîte de vitesses comprenant un premier arbre d'entrée de boîte de vitesses (10) et un deuxième arbre d'entrée de boîte de vitesses (11) disposé coaxialement par rapport à celui-ci, comprenant :
- un premier embrayage à friction (18) et un deuxième embrayage à friction (23) qui sont disposés l'un à côté de l'autre dans la direction axiale et qui présentent à chaque fois un paquet de disques avec des disques intérieurs (24) et des disques extérieurs (17, 22), les disques intérieurs (24) du premier et du deuxième embrayage à friction présentant un diamètre intérieur identique ;
- un premier pot d'embrayage (14) destiné à relier les disques extérieurs (17) du premier embrayage à friction (18) de manière solidaire en rotation au premier arbre d'entrée de boîte de vitesses (10), et un deuxième pot d'embrayage (19) destiné à relier les disques extérieurs (22) du deuxième embrayage (23) de manière solidaire en rotation au deuxième arbre d'entrée de boîte de vitesses (11) ;
- un moyeu d'embrayage (7) qui peut être raccordé de manière solidaire en rotation à un arbre d'entraînement (5) pour le double embrayage (1),
- une membrure d'embrayage (25) raccordée de manière solidaire en rotation au moyeu d'embrayage (7), qui présente un premier support de disques intérieurs (26) pour les disques intérieurs (24) du premier embrayage à friction (18), un deuxième support de disques intérieurs (27) pour les disques intérieurs (24) du deuxième embrayage à friction (23) ainsi qu'une plaque de pression en forme de disque (28) qui est disposée entre le paquet de disques du premier embrayage à friction (18) et le paquet de disques du deuxième embrayage à friction (23),
la plaque de pression en forme de disque (28) s'étendant dans la direction radiale essentiellement depuis le diamètre intérieur des disques intérieurs (24) vers l'extérieur et au moins l'un des supports de disques intérieurs (26, 27) présentant une pièce de connexion radiale (30) qui relie la plaque de pression en forme de disque (28) au moyeu d'embrayage (7),
et **caractérisé en ce que**
le premier et le deuxième support de disques intérieurs (26, 27) sont à chaque fois réalisés d'une seule pièce et sont chacun une pièce façonnée en tôle,
et la plaque de pression en forme de disque (28) est disposée entre les supports de disques intérieurs (26, 27) et est fixée sans jeu par ceux-ci.

2. Double embrayage selon la revendication 1, **caractérisé en ce que** les deux supports de disques intérieurs (26, 27) présentent une pièce de connexion radiale (30).

3. Double embrayage selon la revendication 2, **caractérisé en ce que** le premier et le deuxième support de disques intérieurs (26, 27) sont de même construction.

4. Double embrayage selon l'une quelconque des revendications 1 à 3, **caractérisé en ce que** les supports de disques intérieurs (26, 27) sont connectés directement l'un à l'autre.

5. Double embrayage selon l'une quelconque des revendications 1 à 4, **caractérisé en ce qu'**au moins l'un des supports de disques intérieurs (26, 27) est soudé au moyeu d'embrayage (7).

6. Double embrayage selon l'une quelconque des revendications 1 à 5, **caractérisé en ce que** la plaque de pression (28) présente au moins un gradin de centrage (33) au niveau d'une extrémité tournée vers le moyeu d'embrayage (7).

7. Double embrayage selon l'une quelconque des revendications 1 à 6, **caractérisé en ce que** la pièce de connexion radiale (30) présente au moins un creux.

8. Double embrayage (1) selon l'une quelconque des revendications 1 à 7, **caractérisé en ce qu'**entre le premier support de disques intérieurs (26) et le deuxième support de disques intérieurs (27) est réalisée une chambre (46) qui présente au moins une ouverture au niveau du moyeu d'embrayage et à chaque fois au moins une ouverture (51) au niveau du premier et/ou du deuxième embrayage à friction (18, 23).

9. Double embrayage (1) selon la revendication 8, **caractérisé en ce que** la chambre (46) est divisée en deux chambres partielles (47, 48) par un disque de séparation (45).

10. Double embrayage (1) selon la revendication 8 ou 9, **caractérisé en ce que** le support de disques intérieurs (26, 27) est monté latéralement au niveau d'un épaulement (49) de la membrure d'embrayage (7), au moins une ouverture entre l'épaulement (49) et le support de disques intérieurs (26 ; 27) étant réalisée par au moins un évidement (50) au niveau de l'épaulement (49).
